# EUROPÄISCHE PATENTSCHRIFT

(11) **EP 0 298 035 B1**
(45) Veröffentlichungstag und Bekanntmachung des Hinweises auf die Patenterteilung: **01.06.1994**
(21) Anmeldenummer: 88810435.3
(22) Anmeldetag: 24.06.1988
(51) Int. Cl.: H01J 9/50

(54) **Verfahren zum Rezyklieren von Leuchtstoff- und Fernsehbildröhren**
Method for recycling fluorescent lamps and TV tubes
Méthode pour recycler des tubes fluorescents et des tubes de télévision

(30) Priorität: 29.06.1987 CH 2437/87
(43) Veröffentlichungstag der Anmeldung: 04.01.1989
(73) Patentinhaber: RECYTEC S.A., 2000 Neuchatel (CH)
(72) Erfinder: Hanulik, Jozef, CH-8046 Zurich (CH)
(74) Vertreter: Werner, Guy

(56) Entgegenhaltungen:
- EP-A- 0 157 249
- US-A- 4 607 798

## Beschreibung

Die vorliegende Erfindung betrifft ein Verfahren zum Rezyklieren von Leuchtstoff- und Fernsehbildröhren, die zuerst zertrümmert werden, wonach die metallischen Anteile abgetrennt und der entstandene Glasbruch gewaschen und der Glasrezyklierung zugeführt wird.

Ein solches Verfahren wird von der Firma Fairtec AG in CH-5300 Turgi mit einer Pilotanlage durchgeführt und wurde in einer firmeneigenen Broschüre vom März 1987 publiziert, wobei jedoch das Verfahren lediglich für Leuchtstoffröhren beschrieben wurde.

Gemäss Angaben der schweizerischen lichttechnischen Gesellschaft wird der Verbrauch an Leuchtstoffröhren in der Schweiz heute auf ca 9'000'000 Stück/Jahr geschätzt. Gewichtsmässig sind dies rund 2'250 Tonnen oder volumenmässig ca 15'000 m Leuchstoffröhren, die in Sondermülldeponien entsorgt werden. Das obengenannte Verfahren ist in der ersten bisher durchgeführten Phase lediglich darauf ausgelegt, die Röhren zu zertrümmern und dadurch die volumenmässige Menge für die Sondermülldeponie zu verringern. Erst nach dem publizierten vollständigen Verfahren soll der Glasbruch gewaschen werden, anschliessend die Metallteile entfernt werden und Hg, Cd sowie das Glas rezykliert werden.

Solche Verfahren sind auch im Dokument US-460 7798 beschrieben.

Oftmals scheitern Rezyklierungsverfahren jedoch an der mangelnden Wirtschaftlichkeit und der aufwendigen Arbeitshygiene wegen den auftretenden Hg-Dämpfen. Es ist die Aufgabe der vorliegenden Erfindung, ein Verfahren der eingangs genannten Art derart zu verbessern, dass es einerseits durch Rezyklierung weiterer Stoffe durch höhere Erträge wirtschaftlicher wird und andrerseits preiswerter durchgeführt werden kann.

Dies wird dadurch erreicht, dass das eingangs genannte Verfahren folgende zusätzliche Schritte aufweist, die sich dadurch auszeichnen, dass die Röhren in ein gasdicht verschliessbaren Behältnis eingebracht und unter Wasser zertrümmert werden, wobei die freiwerdenden, aufsteigenden Gase abgesaugt und komprimiert der Wiederverwendung zugeführt werden, wobei dem schadstoffbeschichteten Glasbruch die Schadstoffe lösende beziehungsweise ablösende Säure beigegeben wird, die gelösten und abgelösten Schadstoffe aus dem Glasbruch ausgeschwemmt und die metallischen Anteile daraus entnommen werden und danach der Glasbruch der Weiterverwertung zugeleitet wird, dass der flüssigen Phase ein Ausfällungsmittel beigegeben und anschliessend filtriert wird, wobei der Filterkuchen an Lanthanide-Hersteller zur Weiterverarbeitung geliefert wird, worauf das Filtrat dem Behälter wieder zugeführt wird, in dem die Röhren zertrümmert werden.

Beim bekannten Verfahren wird dem Edelgas beziehungsweise Edelgasgemisch bei der Zertrümmerung keine Bedeutung zugemessen, obwohl dieses in relativ konzentrierter Form anfällt. Zwar ist eine andere Leuchtstoffröhren-Entsorgung bekannt, bei der die Enden abgeschnitten und die Röhren ausgeblasen werden, doch gehen beim Ausblasen die Edelgase verloren und es werden die Schadstoffe nur ungenügend abgetragen. Das erfindungsgemässe Verfahren wirkt hier im ersten Schritt bereits äusserst positiv. Durch die Zertrümmerung unter Wasser können sowohl Röhren mit Ueberdruck wie Leuchtstoffröhren, sowie auch Röhren mit Unterdruck wie Fernsehbildröhren gefahrlos zertrümmert werden. Die aufsteigenden Gase lassen sich auffangen, ohne mit der Umgebungsluft in Verbindung zu treten. Ein Entweichen von in den Gasen vorhandenem Quecksilberdampf kann ebensowenig erfolgen. Das Edelgasgemisch kann einfach komprimiert und der Wiederverwertung zugeführt werden. Das darin vorkommende Quecksilber destilliert bei der Komprimierung und kann einfach ausgeschieden werden.

Das Waschen des Glasbruches wird im bekannten Verfahren vorallem zum Zwecke einer Wiederverwertung des Glases vorgenommen, wodurch die Restmenge, die zu entsorgen ist, verringert wird. Da aber der Altglaspreis für Lampenglas nicht relevant ist, war dieser Schritt bisher unrentabel. Ausserdem war die Reinheit von solchem Glas für die Wiederverwertung bisher zum Teil ungenügend. Hingegen ist durch die bisher übliche Reinigung diesem Glas genügend von dessen Schwermetallen wie Hg und Cd entzogen, so dass es auf normalen Hausmülldeponien gelagert werden darf, wodurch die Endlagerung verbilligt wird.

Die vorgeschlagene Reinigung durch Beigabe einer die Schadstoffe lösenden Säure verbessert die Reinigung erheblich und liefert daher ein besser verwertbares Glas.

Ganz entscheidend ist jedoch die Beigabe eines ausfällenden Mittels, wodurch sich die ausfällbaren Bestandteile entnehmen lassen, beispielsweise durch Sedimentation oder Filtration, worauf aus dieser Ausfällung die vorhandenen Yttriumverbindungen entnommen werden können. Yttrium ist bekanntlich in jeder Leuchtstoffröhre in einer Menge von mindestens 100 mg vorhanden. Damit kann das äusserst kostbare Yttrium in hoher Konzentration zurückgewonnen und wiederverwertet werden. Hiermit erhält das Verfahren einen wesentlichen wirtschaftlichen Impuls. Allein in der Schweiz liesse sich auf diese Art und Weise ca 1 % der Weltproduktion an Yttrium rückgewinnen. Yttrium ist eines der seltenen Elemente (Lanthaniden), das in der Zukunft wesentlich an Bedeutung gewinnen wird durch den Einsatz in sogenannten Supraleitern. Es ist daher damit zu rechnen, dass der Wert des Yttriums um ein Mehrfaches ansteigen wird.

Laborversuche haben gezeigt, dass sich zum Waschen des Glasbruches bzw. zum Lösen oder Ablösen der Schadstoffe HBF₄-Säure besonders eignet. In dieser Säure lassen sich praktisch alle edlen und unedlen Metalle lösen. Auch Yttrium löst sich hierin vorwiegend als Y ³ +, wobei sich nur ein sehr geringer Teil in Form von YF₃ niederschlägt. Wichtig ist aber, dass man die Konzentration der Fluoroborsäure möglichst niedrig, vorteilhaft unter 0,5 % hält. So werden die Aluminiumanteile in den Röhrenfassungen nicht in Al (BF₄)₃ umgewandelt. Die Entstehung von Al (BF₄)₃ würde den Säurehaushalt des Prozesses sonst stark belasten. Vorteilhaft ist auch die Ausfällung mittels Oxalsäure (H₂ C₂ O₄), so dass sich das unlösliche Y (C₂ O₄)₃ . 9H₂O (Yttriumoxalat) bildet.

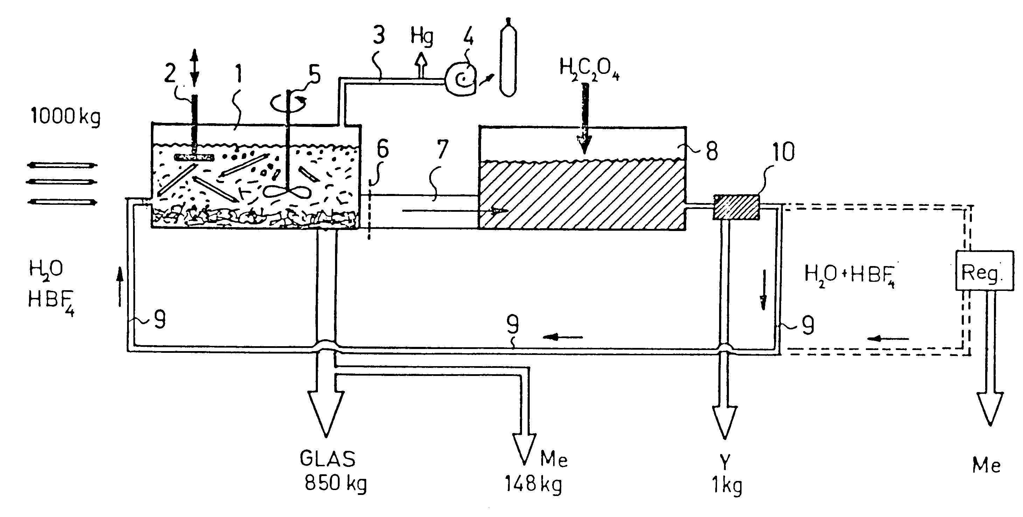

In der beigefügten Zeichnung ist der Verfahrensablauf schematisch dargestellt und anhand der nachfolgenden Beschreibung erläutert. Zur Zeit betragen die Entsorgungskosten für Leuchtstoff- und Fernsehröhren sFr. 1'000.-- bis 1'200.--/t. Eine Charge solcher Röhren wird in einen gasdichten Behälter 1 gegeben. In diesem befindet sich eine Mischung von Wasser und Fluoroborsäure (HBF₄). Ein Zertrümmerer 2 zerstört die Röhren wobei das dabei frei werdende Edelgasgemisch aufsteigt und über das Absaugrohr 3 abgesaugt und mittels dem Kompressor 4 komprimiert wird. Zwar ist diese Edelgasmischung wegen des Ausschlusses der Luft sehr rein, doch kann sie nicht direkt für die Wiederverwertung in Leuchtstoffröhren verwendet werden, weil die Zusammensetzung der Gase in den Röhren je nach der gewünschten Lichtfarbe unterschiedlich ist. Das Gasgemisch kann jedoch komprimiert in Flaschen abgefüllt werden, wonach die entsprechende Auftrennung der Gase mit üblichen Verfahren möglich ist. Weil die Beimischung von Luft vermieden wurde, ist die Konzentration derart hoch, dass auch das Gemisch einen relativ hohen Preis erzielt. Vorteilhaft ist auch, dass der vorhandene Hg-Dampf beim Komprinieren kondensiert und dicht abgeschieden werden kann.

Das Zertrümmern der Röhren unter Wasser ist auch eine besonders sichere Methode, sodass der Schutz der Arbeiter keine grossen Investitionen erfordert. Besonders preiswert ist es, wenn das Behältnis ein Bad ist, welches mit einer Folie abgedeckt ist, wobei diese ähnlich einem Gasometerbehältnis geführt wird. So kann man erst von oben die zu zertrümmernden Röhren einführen, die Folie direkt auf die Flüssigkeit aufliegend anbringen und danach mit dem Zertrümmern beginnen. Die Folie wird dann automatisch von dem sich über der Flüssigkeit ansammelnden Gas gegen den Luftdruck angehoben.

Der Waschvorgang des Glasbruches wird durch einen Rührer 5 gefördert. Damit wird ein Teil der am Glasbruch haftenden Schadstoffe abgelöst und der Rest aufgelöst. Ueber einen Filter 6 mit einer Maschenweite von ca. 0,5 mm wird danach die wässrige Phase aus H₂O, HBF₄ durch eine Ueberführungsleitung in ein zweites Becken 8 gepumpt. Der Anteil an mitgeführten kleinsten Glassplittern ist nicht relevant und belastet die weiteren chemischen Verfahrensschritte nicht.

Der im Behälter 1 zurückbleibende Glasbruch mit metallischem Anteil kann dem Behälter entnommen und der metallische Anteil abgetrennt werden. So ergeben sich aus einer Charge von ca. 1'000 kg Leuchtstoffröhren etwa 850 kg Glas und 148 kg metallische und organische Abfälle. Sowohl das Glas wie auch die metallischen Abfälle können der Wiederverwertung zugeführt werden.

Im zweiten Behälter 8 befindet sich nun eine trübe Flüssigkeit, die sich aus H₂O, HBF₄ sowie den Schadstoffen, im wesentlichen Lanthaniden und feinsten Glassplittern, zusammensetzt. Diesem Filtrat wird nun als Ausfällungsmittel Oxalsäure (H₂C₂O₄) beigegeben. Nach einer gewissen Reaktionszeit bilden sich die entsprechenden Lanthaniden Oxalate, die als unlöslicher Niederschlag anfallen.

Nach Abschluss der Reaktion wird der zweite Behälter 8 über die Rückleitung 9 leergepumpt in der ein Filter 10 angeordnet ist. Ueber die Rückleitung 9 wird das Filtrat dem ersten Behälter 1 wieder zugeführt. Der sich im Filter 10 ausscheidende Filterkuchen mit einem Gewichtsanteil von ca. 2 kg enthält ca. 1 kg Yttrium, welches den Lanthaniden-Herstellern zur Wiederaufbereitung verkauft werden kann. Zurück in den ersten Behälter 1 fliesst ein relativ reines Gemisch aus H₂O und HBF₄ mit einigen Metall-Ionen.

Nach einigen Zyklen kann das Filtrat regeneriert werden in dem beispielsweise elektrolytisch die entsprechenden Metalle an der Anode oder durch Destillation ausgeschieden werden.

## Patentansprüche

1. Verfahren zum Rezyklieren von Leuchtstoff- und Fernsehbildröhren, die zuerst zertrümmert werden, wonach die metallischen Anteile abgetrennt und der entstandene Glasbruch gewaschen und der Glasrezyklierung zugeführt wird, dadurch gekennzeichnet, dass die Röhren in ein gasdicht verschliessbares Behältnis eingebracht und unter Wasser zertrümmert werden, wobei die freiwerdenden, aufsteigenden Gase abgesaugt und komprimiert der Wiederverwendung zugeführt werden, wobei dem schadstoffbeschichteten Glasbruch eine die Schadstoffe lösende beziehungsweise ablösende Säure beigegeben wird,
- die gelösten und abgelösten Schadstoffe aus dem Glasbruch ausgeschwemmt und die metallischen Anteile daraus entnommen werden und danach der Glasbruch der Weiterverwertung zugeleitet wird,
- dass der flüssigen Phase ein Ausfällungsmittel beigegeben und diese anschliessend filtriert wird, wobei der Yttrium enthaltende Filterkuchen an Lanthanide-Hersteller zur Weiterverarbeitung geliefert wird,
- worauf das Filtrat dem Behälter wieder zugeführt wird, in dem die Röhren zertrümmert werden.

2. Verfahren nach Anspruch 1, dadurch gekennzeichnet, dass als die Schadstoffe lösende Säure eine HBF₄ Säure beigegeben wird.

3. Verfahren nach Anspruch 1, dadurch gekennzeichnet, dass dem Filtrat Oxalsäure als Ausfällungsmittel beigegeben wird.

4. Verfahren nach Anspruch 2, dadurch gekennzeichnet, dass die HBF₄ Säure bis zu einer Konzentration von 0,5% zugesetzt wird.

5. Verfahren nach Anspruch 1, dadurch gekennzeichnet, dass das HBF₄ -Säure enthaltende Filtrat nach mehreren Zyklen regeneriert wird und ihm die darin gelösten Metalle zur Weiterverwertung chemisch oder elektrolytisch entzogen werden.

## Claims

1. Process for recycling fluorescent and television tubes, which are first crushed, after which the metallic constituents are separated off, and the broken glass produced is washed and fed to a glass recycling process, characterized in that the tubes are introduced into a container which can be sealed in a gas-tight manner and are cruhsed under water, the ascending gases released being drawn off by suction, compressed and fed to a reuse process, wherein an acid which dissolves or strips off the pollutants is added to the broken glass which is coated whith pollutants, the dissolved and stripped off pollutants are flushed out of the broken glass and metallic constituents are removed therefrom, and then the broken glass is passed to a further reuse process, that a precipitating agent is added to the liquid phase and the latter is then filtered, wherein the yttrium-containing filter cake is supplied for reuse to lanthanide manufacturers, after which the filtrate is fed back to the container in which the tubes are crushed.

2. The process as claimed in claim 1, characterized in that an HBF₄ acid is added as the acid which dissolves the pollutants.

3. The process as claimed in claim 1, characterized in that oxalic acid is added to the filtrate as precipitating agent.

4. The process as claimed in claim 2, characterized in that the HBF₄ acid is added up to a concentration of 0.5%.

5. The process as claimed in claim 1, characterized in that the filtrate containing HBF₄ acid is regenerated after several cycles and the metals dissolved therein are chemically or electrolytically removed from it for reutilization.

## Revendications

1. Procédé de recyclage de tubes fluorescents et de tubes image de téléviseurs, dans lequel les tubes sont d'abord brisés, puis les parties métalliques sont séparées et les débris de verre obtenus sont lavés et amenés au recyclage de verre, caractérisé en ce que les tubes sont amenés dans une enceinte fermée étanche aux gaz et brisés sous eau, les gaz libérés montant à la surface sont aspirés et comprimés en vue de leur réutilisation, un acide capable de dissoudre ou de détacher les substances toxiques situées sur les débris de verre est ajouté aux débris de verre couverts de couches de ces substances, les substances toxiques dissoutes et détachées sont éluées des débris de verre, les parties métalliques sont extraites des débris de verre qui sont amenés au recyclage, en ce que un agent de précipitation est ajouté à la phase liquide et que celle-ci est ensuite filtrée, que le gâteau de filtration contenant de l'yttrium est fourni à des fabricants de lanthanides en vue d'un traitement ultérieur, et que le filtrat est amené à nouveau dans l'enceinte dans laquelle les tubes sont brisés.

2. Procédé selon la revendication 1, caractérisé en ce que l'acide dissolvant les substances toxiques est de l'acide HBF₄.

3. Procédé selon la revendication 1, caractérisé en ce que on ajoute de l'acide oxalique comme agent de précipitation au filtrat.

4. Procédé selon la revendication 2, caractérisé en ce que l'acide HBF₄ est ajouté jusqu'à une concentration de 0.5%.

5. Procédé selon la revendication 1, caractérisé en ce que, après une pluralité de cycles, le filtrat contenant de l'acide HBF₄ est régénéré et que les métaux qui y sont dissous sont extraits par un procédé chimique ou électrolytique en vue de leur recyclage.
